# EUROPEAN PATENT APPLICATION

(11) **EP 4 672 463 A1**
(43) Date of publication of application: **31.12.2025**
(21) Application number: 24892583.6
(22) Date of filing: 09.01.2024
(51) Int. Cl.: H01M 50/244, H01M 50/204

(54) **BATTERY, ELECTRICAL DEVICE, AND ENERGY STORAGE DEVICE**

(30) Priority: 24.11.2023 CN 202323180881 U
(71) Applicant: Contemporary Amperex Technology Co., Limited, Ningde, Fujian 352100 (CN)
(72) Inventor: WU, Kai, Ningde, Fujian 352100 (CN); SHEN, Dan, Ningde, Fujian 352100 (CN); LI, Yao, Ningde, Fujian 352100 (CN); BAI, Jingfeng, Ningde, Fujian 352100 (CN); CHEN, Shilong, Ningde, Fujian 352100 (CN)
(74) Representative: Ziebig Hengelhaupt Intellectual Property Attorneys Patentanwaltskanzlei PartGmbB
(86) International application number: PCT/CN2024/071435
(87) International publication number: WO 2025/107414

(57) **Abstract**

Embodiments of the present application provide a battery, an electrical device, and an energy storage device, which is capable of improving the use performance of the battery. The battery includes: a battery cell, a first wall of the battery cell being provided with a pressure relief mechanism; a support component configured to support the battery cell, the support component including a first support component and a second support component that are connected, the first support component and the second support component being located on the same side of the battery cell, the first support component being located between the first wall and the second support component and attached to the first wall, the first support component being provided with a first through hole corresponding to the pressure relief mechanism, and the second support component being provided with a second through hole corresponding to the pressure relief mechanism; and a first protective component, the first protective component being configured to close the second through hole, and the first protective component being configured to be destroyed when the pressure relief mechanism is actuated, so as to allow an emission from the battery cell to pass through the second support component.

## Description

### CROSS-REFERENCE TO RELATED APPLICATIONS

The present application claims priority to Chinese Patent Application No. 202323180881.3, entitled "BATTERY, ELECTRICAL DEVICE, AND ENERGY STORAGE DEVICE" and filed on November 24, 2023, which is incorporated herein by reference in its entirety.

### TECHNICAL FIELD

Embodiments of the present application relate to the field of battery technologies, and in particular, to a battery, an electrical device, and an energy storage device.

### BACKGROUND

With the increasing severity of environmental pollution, the new energy industry is receiving more and more attention from people. In the new energy industry, the battery technology is an important factor for its development. In the development of the battery technology, in addition to improving the electrical performance of batteries, safety is also an issue that cannot be ignored. If the safety of a battery cannot be guaranteed, the battery cannot be used, and the use performance of the battery is reduced.

Therefore, how to improve the use performance of a battery has become an urgent problem to be solved in the field.

### SUMMARY

Embodiments of the present application provide a battery, an electrical device, and an energy storage device, which is capable of improving the use performance of the battery.

In a first aspect, a battery is provided, including: a battery cell, a first wall of the battery cell being provided with a pressure relief mechanism; a support component configured to support the battery cell, the support component including a first support component and a second support component that are connected, the first support component and the second support component being located on the same side of the battery cell, the first support component being located between the first wall and the second support component and attached to the first wall, the first support component being provided with a first through hole corresponding to the pressure relief mechanism, and the second support component being provided with a second through hole corresponding to the pressure relief mechanism; a first protective component, the first protective component being configured to close the second through hole, and the first protective component being configured to be destroyed when the pressure relief mechanism is actuated so as to allow an emission from the battery cell to pass through the second support component.

In the embodiment of the present application, the support component and the first protective component are arranged in the battery, the support component includes the first support component and the second support component that are connected, the first support component and the second support component are located on the same side of the battery cell, the first support component is located between the first wall and the second support component and is attached to the first wall, the second support component is provided with the second through hole corresponding to the pressure relief mechanism, the first protective component is configured to close the second through hole, and the first protective component is configured to be destroyed when the pressure relief mechanism is actuated so that the emission from the battery cell passes through the second support component. In this way, when thermal runaway occurs in the battery cell, the arrangement of the first protective component is capable of reducing the risk of the emission from a side of the first protective component away from the pressure relief mechanism flowing to the pressure relief mechanism through the second through hole, so as to reduce a thermal impact on the battery cell, and reduce the impact on an actuation performance of the pressure relief mechanism, thereby improving the use performance of the battery.

In some implementations, the first protective component is arranged on a surface of the second support component away from the first wall. In this way, in the embodiment of the present application, when thermal runaway occurs in the battery cell, the first protective component is destroyed when the pressure relief mechanism of the battery cell is actuated, which is capable of effectively reducing the risk of the emission from the side of the first protective component away from the pressure relief mechanism flowing to the pressure relief mechanism through the second through hole, thereby reducing the impact on the actuation performance of the pressure relief mechanism and improving the use performance of the battery. At the same time, the arranging method is simple and easy to process and manufacture.

In some implementations, the first protective component is provided with a first weak region, the first weak region is configured to be capable of being destroyed by the emission when the pressure relief mechanism is actuated, so as to allow the emission to pass through the first weak region.

In the embodiment of the present application, the first weak region is arranged on the first protective component, and the first weak region is configured to be capable of being destroyed by the emission when the pressure relief mechanism is actuated, that is, when the internal pressure or temperature of the battery cell reaches a threshold, the emission is capable of promptly and quickly passing through the first weak region to achieve rapid pressure relief of the battery cell, thereby reducing the influence of the accumulation of the emission on the side of the first protective component close to the pressure relief mechanism of the battery on the actuation performance of the pressure relief mechanism, and thereby improving the use performance of the battery.

In some implementations, the first weak region meets at least one of the following: a melting point of a material of the first weak region is lower than a melting point of a material of the rest part of the first protective component; a thickness of the first weak region is smaller than a thickness of the rest part of the first protective component; a surface of the first weak region in a direction perpendicular to a thickness direction of the first protective component is provided with a notch.

In the embodiment of the present application, the first weak region is set to at least one of the following: the melting point of the material at the first weak region is lower than the melting point of the material of the rest part of the first protective component; the thickness of the first weak region is smaller than the thickness of the rest part of the first protective component; the surface of the first weak region perpendicular to the thickness direction of the first protective component is provided with the notch, so that the first weak region is more easily destroyed by the emission of the battery cell than the rest part of the first protective component, and when the internal pressure or temperature of the battery cell reaches the threshold, the emission is capable of promptly and quickly passing through the first weak region to achieve rapid pressure relief of the battery cell, thereby reducing the influence of the accumulation of the emission on the side of the first protective component close to the pressure relief mechanism of the battery cell on the actuation performance of the pressure relief mechanism, and further improving the use performance of the battery.

In some implementations, there are a plurality of pressure relief mechanisms, a plurality of first weak regions are provided on the first protective component, and the plurality of first weak regions one-to-one correspond to the plurality of pressure relief mechanisms. In this way, in the embodiment of the present application, by arranging the plurality of first weak regions on the first protective component, and the plurality of first weak regions one-to-one correspond to the plurality of pressure relief mechanisms, when thermal runaway occurs in the battery cell, that is, when the internal pressure or temperature of the battery cell reaches the threshold, the emission generated by the battery cell is capable of promptly and quickly passing through the corresponding first weak region, so as to achieve rapid pressure relief of the battery cell, and at the same time reducing the influence of the emission on the actuation performance of the pressure relief mechanisms of other battery cells, thereby improving the use performance of the battery.

In some implementations, on a plane perpendicular to the thickness direction of the first protective component, a projection of the first protective component covers a projection of the pressure relief mechanism.

In the embodiment of the present application, on the plane perpendicular to the thickness direction of the first protective component, by setting the projection of the first protective component to cover the projection of the pressure relief mechanism, the first protective component is capable of further reducing the risk of the emission from the side of the first protective component away from the pressure relief mechanism flowing to the pressure relief mechanism through the first protective component, thereby reducing the impact on the actuation performance of the pressure relief mechanism, and further improving the use performance of the battery.

In some implementations, the battery further includes: a second protective component, the second protective component is configured to close the first through hole, and the second protective component is configured to be destroyed when the pressure relief mechanism is actuated, so as to allow the emission from the battery cell to pass through the first support component.

In the embodiment of the present application, the second protective component is arranged in the battery, the second protective component is configured to close the first through hole, and the second protective component is configured to be destroyed when the pressure relief mechanism is actuated, so that the emission from the battery cell pass through the first support component. In this way, when thermal runaway occurs in the battery cell, the arrangement of the second protective component is capable of reducing the risk of the emission from a side of the second protective component away from the pressure relief mechanism flowing to the pressure relief mechanism through the first through hole, so as to reduce a thermal impact on the battery cell, and reduce the impact on an actuation performance of the pressure relief mechanism, thereby improving the use performance of the battery.

In some implementations, the second protective component is arranged on a surface of the first support component away from the first wall. In this way, in the embodiment of the present application, when thermal runaway occurs in the battery cell, the second protective component is destroyed when the pressure relief mechanism of the battery cell is actuated, which is capable of effectively reducing the risk of the emission from the side of the second protective component away from the pressure relief mechanism flowing to the pressure relief mechanism through the first through hole, thereby reducing the impact on the actuation performance of the pressure relief mechanism and improving the use performance of the battery. At the same time, the arranging method is simple and easy to process and manufacture.

In some implementations, the second protective component is provided with a second weak region, the second weak region is configured to be capable of being destroyed by the emission when the pressure relief mechanism is actuated, so as to allow the emission to pass through the second protective component.

In the embodiment of the present application, the second weak region is arranged on the second protective component, and the second weak region is configured to be capable of being destroyed by the emission when the pressure relief mechanism is actuated, that is, when the internal pressure or temperature of the battery cell reaches a threshold, the emission is capable of promptly and quickly passing through the second weak region to achieve rapid pressure relief of the battery cell, thereby reducing the influence of the accumulation of the emission on the side of the second protective component close to the pressure relief mechanism of the battery on the actuation performance of the pressure relief mechanism, and thereby improving the use performance of the battery.

In some implementations, the second weak region meets at least one of the following: a melting point of a material of the second weak region is lower than a melting point of a material of the rest part of the second protective component; a thickness of the second weak region is smaller than a thickness of the rest part of the second protective component; a surface of the second weak region in a direction perpendicular to a thickness direction of the second protective component is provided with a notch.

In the embodiment of the present application, the second weak region is set to at least one of the following: the melting point of the material at the second weak region is lower than the melting point of the material of the rest part of the second protective component; the thickness of the second weak region is smaller than the thickness of the rest part of the second protective component; the surface of the second weak region perpendicular to the thickness direction of the second protective component is provided with the notch, so that the second weak region is more easily destroyed by the emission of the battery cell than the rest part of the second protective component, and when the internal pressure or temperature of the battery cell reaches the threshold, the emission is capable of promptly and quickly passing through the second weak region to achieve rapid pressure relief of the battery cell, thereby reducing the influence of the accumulation of the emission on the side of the second protective component close to the pressure relief mechanism of the battery cell on the actuation performance of the pressure relief mechanism, and further improving the use performance of the battery.

In some implementations, the battery further includes: a separating component, the separating component is connected to the first support component, the first support component is attached to the first wall by an adhesive, and the separating component is configured to prevent the adhesive from being applied to a region where the pressure relief mechanism is located.

In the embodiment of the present application, the separating component is arranged in the battery, and the separating component is connected to the first support component. When the first support component is attached to the first wall by the adhesive, the separating component is configured to prevent the adhesive from being applied to the region where the pressure relief mechanism is located, which is capable of effectively reducing the impact of the adhesive entering the pressure relief mechanism on the actuation performance of the pressure relief mechanism, thereby improving the use performance of the battery.

In some implementations, the separating component is provided with a groove opening toward the battery cell, at least a portion of a side wall of the groove is located in the first through hole, and an outer edge of the groove is connected to the side wall and is arranged between the first support component and the first wall.

In the embodiment of the present application, by setting the separating component as a groove with the opening toward the battery cell, at least a portion of the side wall of the groove is located in the first through hole, and the outer edge of the groove is connected to the side wall and is arranged between the first support component and the first wall. When the first support component is configured to be attached to the first wall by the adhesive, the adhesive is capable of being effectively prevented from being applied between the support component and the pressure relief mechanism, thereby effectively reducing the influence of the adhesive entering the pressure relief mechanism on the actuation performance of the pressure relief mechanism, and further improving the use performance of the battery.

In some implementations, the bottom wall of the groove is configured to be capable of being destroyed by the emission when the pressure relief mechanism is actuated, so that the emission passes through the separating component.

In the embodiment of the present application, by configuring the bottom wall of the groove to be capable of being destroyed by the emission discharged from the battery cell when the pressure relief mechanism is actuated, and allowing the emission to pass through the separating component, the emission can be discharged in a timely manner, thereby reducing the impact of the accumulation of the emission in the groove on the actuation performance of the pressure relief mechanism, further reducing the thermal impact on the battery cell, and improving the use performance of the battery.

In some implementations, the bottom wall of the groove is provided with a third weak region, and the third weak region is configured to be capable of being destroyed by the emission when the pressure relief mechanism is actuated, so that the emission passes through the separating component.

In the embodiment of the present application, the third weak region is arranged on the bottom wall of the groove, and the third weak region is configured to be capable of being destroyed by the emission when the pressure relief mechanism is actuated, that is, when the internal pressure or temperature of the battery cell reaches a threshold, the emission is capable of promptly and quickly passing through the separating component to achieve rapid pressure relief of the battery cell, thereby effectively reducing the influence of the accumulation of the emission in the groove on the actuation performance of the pressure relief mechanism, and thereby improving the use performance of the battery.

In some implementations, the third weak region meets at least one of the following: a melting point of a material of the third weak region is lower than a melting point of a material of the rest part of the separating component; a thickness of the third weak region is smaller than a thickness of the rest part of the separating component; a surface of the third weak region in a direction perpendicular to a thickness direction of the separating component is provided with a notch.

In the embodiment of the present application, the third weak region is set to at least one of the following: the melting point of the material at the third weak region is lower than the melting point of the material of the rest part of the separating component; the thickness of the third weak region is smaller than the thickness of the rest part of the separating component; the surface of the third weak region perpendicular to the thickness direction of the separating component is provided with the notch, so that the third weak region is more easily destroyed by the emission of the battery cell than the rest part of the separating component, and when the internal pressure or temperature of the battery cell reaches the threshold, the emission is capable of promptly and quickly passing through the third weak region to achieve rapid pressure relief of the battery cell, thereby reducing the influence of the accumulation of the emission on the side of the separating component close to the pressure relief mechanism of the battery cell on the actuation performance of the pressure relief mechanism, and further improving the use performance of the battery.

In some implementations, the battery further includes: a third protective component connected to a surface of the separating component facing away from the pressure relief mechanism to protect the separating component.

In the embodiment of the present application, the third protective component is arranged in the battery, and the third protective component is connected to the surface of the separating component facing away from the pressure relief mechanism, so that the third protective component is capable of protecting the separating component, thereby reducing the possibility of damage to the surface of the separating component facing away from the pressure relief mechanism when subjected to vibration, impact, high temperature, and the like, thereby improving the use performance of the battery.

In some implementations, the separating component and the third protective component are configured to be capable of being destroyed by the emission from the battery cell when the pressure relief mechanism is actuated, so that the emission passes through the separating component and the third protective component.

In the embodiment of the present application, the separating component and the third protective component are configured to be capable of being destroyed by the emission from the battery cell when the pressure relief mechanism is actuated, so that the emission passes through the separating component and the third protective component. As a result, during the actuation of the pressure relief mechanism, the emission discharged by the pressure relief mechanism can smoothly pass through the separating component and the third protective component and be discharged from the electrical cavity of the battery, thereby reducing the thermal impact on the battery cell and improving the use performance of the battery.

In some implementations, a melting point of the third protective component is greater than a melting point of the separating component.

In the embodiment of the present application, the third protective component is connected to the surface of the separating component facing away from the pressure relief mechanism, and the melting point of the third protective component is set to be greater than the melting point of the separating component; therefore, it is capable of reducing the possibility of damage to the surface of the separating component facing away from the pressure relief mechanism when subjected to vibration, impact, high temperature, and the like, thereby improving the use performance of the battery.

In some implementations, the material of the first protective component is one of the following materials: polypropylene, polycarbonate, polyethylene terephthalate, mica, glass fiber, ceramic fiber, and polyethylene epoxy resin. In this way, in the embodiment of the present application, by setting the material of the first protective component to one of the following materials: polypropylene, polycarbonate, polyethylene terephthalate, mica, glass fiber, ceramic fiber, and polyethylene epoxy resin, the insulation performance of the first protective component is capable of being effectively improved, and the risk of short circuit inside the battery is capable of being reduced, thereby improving the use performance of the battery.

In a second aspect, an electrical device is provided, including the battery according to the any one of the implementations in the first aspect. The battery is configured to provide electric energy for the electrical device.

In some implementations, the electrical device may be a vehicle, a ship, an aircraft, or the like.

In a third aspect, an energy storage device is provided, including the battery according to the any one of the implementations in the first aspect. The battery is configured to store electric energy for the energy storage device.

### BRIEF DESCRIPTION OF DRAWINGS

In order to explain technical solutions of embodiments of the present application more clearly, a brief introduction of drawings to be used for describing the embodiments of the present application will be made below. Apparently, the drawings described below are merely some embodiments of the present application, and other drawings can be obtained according to these drawings by those skilled in the art without creative labor.
FIG. 1 is a schematic structural diagram of a vehicle according to an embodiment of the present application.
FIG. 2 is a schematic structural diagram of a battery according to an embodiment of the present application.
FIG. 3 is a schematic structural diagram of a battery cell according to an embodiment of the present application.
FIG. 4 is an exploded schematic structural diagram of a battery according to another embodiment of the present application.
FIG. 5 is a schematic sectional diagram of a battery according to an embodiment of the present application.
FIG. 6 is a schematic partial sectional diagram of a battery according to an embodiment of the present application.
FIG. 7 is a schematic structural diagram of a first protective component according to an embodiment of the present application.
FIG. 8 is a schematic structural diagram of a first protective component according to another embodiment of the present application.
FIG. 9 is a schematic sectional diagram of a battery according to another embodiment of the present application.
FIG. 10 is a schematic partial sectional diagram of a battery according to another embodiment of the present application.
FIG. 11 is a schematic sectional diagram of a battery according to another embodiment of the present application.
FIG. 12 is a schematic partial sectional diagram of a battery according to another embodiment of the present application.

Description of reference numerals: 1-Vehicle; 10-Battery; 20-Battery cell; 30-Controller; 40-Motor; 11-Box; 21-Shell; 22-Electrode assembly; 211-Case; 212-Cover plate; 213-Pressure relief mechanism; 221a-First tab; 222a-Second tab; 214-Electrode terminal; 214a-Positive electrode terminal; 214b-Negative electrode terminal; 111-Box pressure relief valve; 12-Support component; 13-First protective component; 112-Adhesive; 121-First support component; 122-Second support component; 1211-First through hole; 1221-Second through hole; 215-First wall; 131-First weak region; 14-Second protective component; 141-Second weak region; 15-Separating component; 16-Third protective component; 150-Groove; 151-Side wall; 152-Outer edge; 153-Bottom wall; 154-Third weak region.

The accompanying drawings are not drawn to actual scale.

### DETAILED DESCRIPTION

Implementations of the present application will be described in further detail below in conjunction with the embodiments with reference to the drawings. The following detailed description of the embodiments and the drawings are intended to exemplarily describe the principles of the embodiments of the present application, instead of limiting the scope of the embodiments of the present application, that is, the embodiments of the present application are not limited to the described embodiments.

Unless otherwise defined, all technical and scientific terms used in the embodiments of the present application have the same meaning as commonly understood by those skilled in the art belonging to the technical field of the embodiments of the present application; the terms used herein are intended only for the purpose of describing specific embodiments and are not intended to limit the embodiments of the present application; the terms "including" and "having" and any variations thereof in the specification and the claims of the present application and in the description of drawings above are intended to cover non-exclusive inclusion.

In the description of the embodiments of the present application, the technical terms "first", "second", and the like, are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of" is two or more, unless otherwise explicitly and specifically defined.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the description of the embodiment of the present application, the term "and/or" is merely an association that describes the associated object, indicating that there can be three kinds of relationships, such as A and/or B, which can be denoted as: the existence of A alone, the existence of A and B at the same time, and the existence of B alone. In addition, the character "/" herein generally means that the associated objects before and after it are in an "or" relationship.

It should be understood that in the description of the embodiments of the present application, the term "a plurality of" refers to more than two (including two). Similarly, "a plurality of groups" refers to more than two groups (including two groups), and "a plurality of plates" refers to more than two plates (including two plates).

In the description of the embodiments of the present application, orientation or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationships shown in the accompanying drawing, and are only for the convenience of describing the embodiments of the present application and simplifying the description, and do not indicate or imply that the apparatus or element referred to must have a specific orientation, be constructed and operated in a specific orientation, and therefore cannot be construed as a restriction on the embodiments of the present application.

In the description of the embodiments of the present application, unless otherwise expressly specified or limited, the technical terms "mounted", "linked", "connected", "fixed" and other terms shall be understood broadly, for example, they may be fixed, detachable, or integral, or mechanically or electrically connected, or directly linked, or indirectly linked through an intermediate medium, and may be communicated internally or interacted between two elements. For those of ordinary skill in the art, the specific meaning of the above terms in the present application may be understood on a case-by-case basis.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the present application, the battery refers to a physical module that includes one or a plurality of battery cells to supply electric energy. For example, the battery mentioned in the present application may include a battery module, a battery pack, or the like. The battery generally includes a box body for packaging one or a plurality of battery cells. The box body can reduce the influence of liquid or other foreign matters on charging or discharging of the battery cell.

It should be understood that the battery cell in the embodiment of the present application includes, but is not limited to, a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, and the like.

In some implementations, the battery cell in the embodiment of the present application may be a metal battery, and specifically, the metal battery may include a lithium metal secondary battery, a sodium metal battery, a magnesium metal battery, or the like.

In some implementations, the battery cell generally includes an electrode assembly. The electrode assembly includes a positive electrode, a negative electrode, and a spacer. During charging and discharging of the battery cell, active ions (such as lithium ions) are intercalated and deintercalated back and forth between the positive electrode and the negative electrode. The spacer is arranged between the positive electrode and the negative electrode, and functions to prevent a short circuit between the positive electrode and the negative electrode while enabling the active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite to each other in a thickness direction thereof, and the positive electrode active material layer is provided on either or both of the two opposite surfaces of the positive electrode current collector.

As an example, a metal foil or a composite current collector may be used as the positive electrode current collector. For example, silver surface-treated aluminum or stainless steel, stainless steel, copper, aluminum, nickel, carbon electrode, carbon, nickel, titanium, or the like may be used as the metal foil. The composite current collector may include a polymer material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and respective modified compounds thereof. In some implementations, other conventional materials that may be used as positive electrode active materials for batteries may also be used. These positive electrode active materials may be used alone or in combination of two or more thereof. Examples of the lithium-containing phosphate may include, but are not limited to, at least one of lithium iron phosphate (e.g., LiFePO4 (also abbreviated as LFP)), lithium iron phosphate-carbon composite, lithium manganese phosphate (e.g., LiMnPO4), lithium manganese phosphate-carbon composite, lithium iron manganese phosphate, and lithium iron manganese phosphate-carbon composite.

As an example, the positive electrode active material may include at least one of a sodium transition metal oxide, a polyanionic compound, and a Prussian blue compound.

In some implementations, the sodium transition metal oxide may be a doping-modified sodium transition metal oxide, and the doping modification of the sodium transition metal oxide may include at least one of sodium-site doping modification, oxygen-site doping modification, transition metal-site doping modification, and surface coating modification.

In some implementations, the positive electrode may adopt a foam metal. The foam metal may be foam nickel, foam copper, foam aluminum, foam alloy, foam carbon, or the like. When the foam metal is used as the positive electrode, the surface of the foam metal may not be provided with a positive electrode active material, and of course, may also be provided with a positive electrode active material. As an example, a lithium source material, a potassium metal, or a sodium metal may also fill or/and be deposited in the foam metal, and the lithium source material is a lithium metal and/or a lithium-rich material.

In some implementations, the negative electrode may be a negative electrode plate, and the negative electrode plate may include a negative electrode current collector.

As an example, the negative electrode current collector may be a metal foil, a foam metal, or a composite current collector. For example, silver surface-treated aluminum or stainless steel, stainless steel, copper, aluminum, nickel, carbon electrode, carbon, nickel, titanium, or the like may be used as the metal foil. The composite current collector may include a polymer material substrate layer and a metal layer. The foam metal may be foam nickel, foam copper, foam aluminum, foam alloy, foam carbon, or the like. The composite current collector can be formed by forming a metal material (copper, copper alloys, nickel, nickel alloys, titanium, titanium alloys, silver, silver alloys, and the like) on a polymer material substrate (such as substrate of polypropylene, polyethylene terephthalate, polybutylene terephthalate, polystyrene, polyethylene, and the like).

In some implementations, the battery cell in the embodiments of the present application may be a negative electrode-free sodium secondary battery.

A negative electrode-free sodium secondary battery refers to a battery cell in which a negative electrode active material layer is not actively provided on the negative electrode side during the manufacturing process of the battery cell. For example, a sodium metal or carbonaceous active material layer is not provided at the negative electrode through a coating or deposition process to form a negative electrode active material layer in the manufacturing process of the battery cell. During the first charge, sodium ions gain electrons on a cathode side, and metallic sodium is deposited on the surface of the current collector to form a sodium metal phase. During discharge, the metallic sodium can be converted into sodium ions and return to the positive electrode, thus achieving cyclic charge and discharge. Compared with other sodium secondary batteries, negative electrode-free sodium secondary batteries can achieve higher energy density because of absence of negative electrode material layers.

In some implementations, in order to improve the performance of battery cells, some functional coatings, such as a carbonaceous material, a metal oxide, and an alloy, can be provided on a negative electrode side of the negative electrode-free sodium secondary battery to improve the conductivity of the negative electrode current collector and improve the uniformity of the deposited sodium metal.

In some implementations, a material of the positive electrode current collector may be aluminum, and a material of the negative electrode current collector may be copper.

In some implementations, the electrode assembly further includes a spacer, and the spacer is arranged between the positive electrode and the negative electrode.

In some embodiments, the spacer is a separator. The embodiments of the present application have no particular limitation on the type of the separator, and any well-known porous structure separator with good chemical stability and mechanical stability can be used.

As an example, the main material of the separator may be selected from at least one of glass fiber, non-woven fabric, polyethylene, polypropylene, polyvinylidene fluoride, and ceramic.

In some implementations, the spacer is a solid electrolyte. The solid electrolyte is provided between the positive electrode and the negative electrode, and functions to transport ions and isolate the positive electrode from the negative electrode.

In some implementations, the battery cell further includes an electrolyte, and the electrolyte functions to conduct ions between the positive electrode and the negative electrode. There is no specific limitation on the type of electrolyte in the embodiments of the present application, and it can be selected according to the requirement. The electrolyte may be liquid, gel, or solid.

In some implementations, the electrode assembly is of a wound structure. The positive electrode plate and the negative electrode plate are wound into the wound structure.

In some implementations, the electrode assembly is pf a stacked structure. As an example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided and arranged between any adjacent positive electrode plates or negative electrode plates.

As an example, the spacers can be continuously arranged between any adjacent positive electrode plates or negative electrode plates by folding or winding.

In some implementations, the shape of the electrode assembly may be a cylinder, a flat shape, a polygon prism, or the like.

In some implementations, the electrode assembly is provided with tabs, and the tabs can conduct current out from the electrode assembly. The tabs include a positive tab and a negative tab.

In some implementations, the battery cell may include a shell. The shell is configured to package components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch cell, or a battery cell in another shape. The prismatic battery cell includes a square-shell battery cell, a blade-shaped battery cell, and a multi-prism battery. For example, the multi-prism battery may be a hexagonal prism battery.

In order to meet different power requirements, the battery in the embodiments of the present application may include a plurality of battery cells. The plurality of battery cells may be connected in series, in parallel, or in parallel-series connection. The parallel-series connection refers to a combination of series connection and parallel connection. Optionally, first, a plurality of battery cells may be connected in series, in parallel, or in parallel-series connection to form a battery module, and then, a plurality of battery modules may be connected in series, in parallel, or in parallel-series connection to form a battery. That is, a plurality of battery cells may directly form a battery, or may first form battery modules, and then the battery modules form a battery. The battery is further arranged in the electrical device to provide electrical energy for the electrical device.

In some implementations, the battery in the embodiments of the present application may be a battery module, and when a plurality of battery cells are provided, the plurality of battery cells are arranged and fixed to form a battery module.

In some implementations, the battery in the embodiments of the present application may be a battery pack. The battery includes a box and a battery cell. The battery cell or the battery module is accommodated in the box.

In some implementations, the box in the embodiments of the present application may be used as a part of a vehicle chassis structure. For example, a part of the box may become at least a part of a floor of the vehicle, or a part of the box may become at least a part of a cross beam and a longitudinal beam of the vehicle.

With the increasing severity of environmental pollution, the new energy industry is receiving more and more attention from people. In the new energy industry, the battery technology is an important factor for its development. In the development of the battery technology, in addition to improving the electrical performance of batteries, safety is also an issue that cannot be ignored. If the safety of the batteries cannot be guaranteed, the batteries cannot be used, which reduces the use performance of the battery. At present, during the thermal runaway of a battery cell, the high-temperature gas and particulate matter released through the pressure relief mechanism of the battery cell will rebound due to the impact on the inner wall or cover plate and other structures of the box. Emissions after the rebound may have a thermal impact on the pressure relief mechanisms of other battery cells, thereby causing thermal runaway of other battery cells, and also affecting the actuation performance of the pressure relief mechanism. Therefore, how to improve the use performance of a battery has become an urgent problem to be solved in the field.

In view of this, an embodiment of the present application provides a battery, including: a battery cell, a first wall of the battery cell being provided with a pressure relief mechanism; a support component configured to support the battery cell, the support component including a first support component and a second support component that are connected, the first support component and the second support component being located on the same side of the battery cell, the first support component being located between the first wall and the second support component and attached to the first wall, the first support component being provided with a first through hole corresponding to the pressure relief mechanism, and the second support component being provided with a second through hole corresponding to the pressure relief mechanism; a first protective component, the first protective component being configured to close the second through hole, and the first protective component being configured to be destroyed when the pressure relief mechanism is actuated so as to allow an emission from the battery cell to pass through the second support component. In this way, when thermal runaway occurs in the battery cell, the arrangement of the first protective component is capable of reducing the risk of the emission from the side of the first protective component away from the pressure relief mechanism flowing to the pressure relief mechanism through the second through hole, thereby reducing the thermal impact on the pressure relief mechanism and reducing the impact on the actuation performance of the pressure relief mechanism, thereby improving the use performance of the battery.

The electrical device may be a vehicle, a mobile phone, a portable device, a laptop, a ship, a spacecraft, an electric toy, an electric tool, and the like. The vehicle may be a fuel vehicle, a gas vehicle, or a new-energy vehicle. The new-energy vehicle may be an all-electric vehicle, a hybrid electric vehicle, an extended-range vehicle, or the like. The spacecraft includes an airplane, a rocket, a space shuttle, a spaceship, and the like. The electric toy includes fixed or mobile electric toys, such as a game machine, an electric vehicle toy, an electric ship toy, an electric airplane toy, and the like. The electric tool includes a metal cutting tool, an electric grinding tool, an electric assembling tool, an electric tool for railways, for example, an electric drill, an electric grinding machine, an electric wrench, an electric screwdriver, an electric hammer, an electric impact drill, a concrete vibrator, and an electric planer.

It should be understood that the technical solutions described in the examples of the present application are not only applicable to the electrical devices described above, but also applicable to all devices using batteries. For the sake of brevity, the following embodiments are described by taking the electrical device being an electric vehicle as an example.

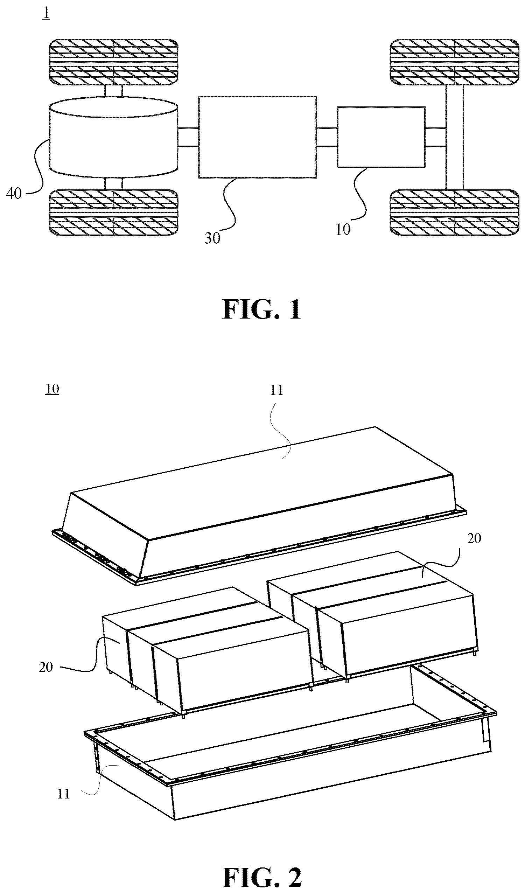

For example, as shown in FIG. 1, a schematic structural diagram of a vehicle 1 according to an embodiment of the present application is shown. The vehicle 1 may be a fuel vehicle, a gas vehicle, or a new energy vehicle, and the new energy vehicle may be an all-electric vehicle, a hybrid vehicle, an extended range electric vehicle, or the like. A motor 40, a controller 30, and a battery 10 may be arranged inside the vehicle 1, and the controller 30 is configured to control the battery 10 to supply power to the motor 40. For example, the battery 10 may be arranged at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for operation power requirements of the vehicle 1 during starting, navigation, and running. In another implementation of the present application, the battery 10 may be used not only as an operating power source of the vehicle 1, but also as a driving power source of the vehicle 1, replacing or partially replacing fuel or natural gas to provide driving power for the vehicle 1.

In order to meet different power consumption needs, the battery 10 in the embodiments of the present application may be a battery cell group or a battery pack. The battery 10 may include at least one battery cell group, and the battery cell group includes a plurality of battery cells. The plurality of battery cells may be electrically connected in series, in parallel, or in parallel-series to form the battery 10, where the parallel-series connection refers to a combination of series connection and parallel connection. The battery 10 may also be referred to as a battery pack. For example, first, a plurality of battery cells may be connected in series, in parallel, or in parallel-series connection to form a battery module, and then, a plurality of battery modules may be connected in series, in parallel, or in parallel-series connection to form a battery 10. That is, a plurality of battery cells may directly form a battery 10, or may first form battery modules, and then the battery modules form a battery 10.

In some implementations, the battery 10 may include a plurality of battery cells. For example, as shown in FIG. 2, which is a schematic structural diagram of a battery 10 according to an embodiment of the present application. The battery 10 may include a plurality of battery cells 20. The battery 10 can also include a box 11, the interior of the box 11 is of a hollow structure, and the plurality of battery cells 20 are accommodated in the box 11. For example, the plurality of battery cells 20 are place in the box 11 after being combined in parallel, in series, or in parallel-series connection.

In some implementations, the battery 10 may also include other structures, which will not be repeated here. For example, the battery 10 may further include a bus component, and the bus component is configured to achieve electrical connection between the plurality of battery cells 20, such as parallel connection, series connection, or parallel-series connection. Specifically, the bus component may achieve electrical connection between the battery cells 20 by connecting electrode terminals of the battery cells 20. Further, the bus component may be fixed to the electrode terminals of the battery cells 20 by welding. Electric energy of the plurality of battery cells 20 may be further led out through an electrically conductive mechanism penetrating the box. Optionally, the electrically conductive mechanism may also belong to a bus component.

In the embodiments of the present application, depending on different power requirements, the quantity of battery cells 20 may be set to any value. The plurality of battery cells 20 may be in series connection, parallel connection, or parallel-series connection to achieve a large capacity or power. Each battery 10 may include a large quantity of battery cells 20, and therefore, in order to facilitate installation, the battery cells 20 may be arranged in groups, and each group of battery cells 20 forms a battery module. The quantity of the battery cells 20 in the battery module is not limited, and it can be set according to requirements. The battery 10 may include a plurality of battery modules, and the battery modules may be connected in series, in parallel, or in parallel-series connection.

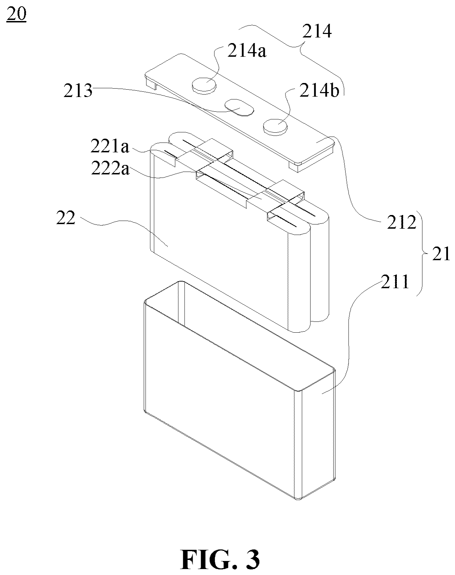

For example, as shown in FIG. 3, a schematic structural diagram of a battery cell 20 according to an embodiment of the present application is shown. The battery cell 20 includes one or a plurality of electrode assemblies 22, a case 211, and a cover plate 212. The case 211 and the cover plate 212 form a shell 21 or a battery case. Walls of the case 211 and walls of the cover plate 212 are both called walls of the battery cell 20. For a cuboid-shaped battery cell 20, the walls of the case 211 include a bottom wall and four side walls. The case 211 is determined based on the shape of one or a plurality of electrode assemblies 22 combined together. For example, the case 211 may be a hollow cuboid, cube, or cylinder, and one of surfaces of the case 211 has an opening to allow the one or a plurality of electrode assemblies 22 to be placed inside the case 211. For example, when the case 211 is a hollow rectangular prism or cube, one of the flat planes of the case 211 serves as the open face, meaning that this plane does not have a wall body, allowing the interior and exterior of the case 211 to communicate with each other. When the case 211 may be a hollow cylinder, the end surface of the case 211 is the open face, meaning that this end surface does not have a wall body, allowing the interior and exterior of the case 211 to communicate with each other. The cover plate 212 covers the opening and is connected to the case 211 to form a closed cavity in which the electrode assembly 22 is placed. The case 211 is filled with an electrolyte, such as an electrolytic solution.

The battery cell 20 may further comprise two electrode terminals 214, and the two electrode terminals 214 may be provided on the cover plate 212. The cover plate 212 is generally in the shape of a flat plate, and the two electrode terminals 214 are fixed on a flat plate surface of the cover plate 212. The two electrode terminals 214 are a positive electrode terminal 214a and a negative electrode terminal 214b, respectively. Each electrode terminal 214 is correspondingly provided with a connecting member, also referred to as a current collecting member, which is located between the cover plate 212 and the electrode assembly 22 and configured to electrically connect the electrode assembly 22 to the electrode terminal 214.

As shown in FIG. 3, each electrode assembly 22 has a first tab 221a and a second tab 222a. The first tab 221a and the second tab 222a have opposite polarities. For example, when the first tab 221a is a positive tab, the second tab 222a is a negative tab.

In the battery cell 20, according to actual use requirements, there may be a single or a plurality of electrode assemblies 22. As shown in FIG. 3, there are 2 separate electrode assemblies 22 arranged in the battery cell 20.

A pressure relief mechanism 213 may also be arranged on the battery cell 20. The pressure relief mechanism 213 is configured, when an internal pressure or temperature of the battery cell 20 reaches a threshold, to be actuated to relieve the internal pressure or heat.

The pressure relief mechanism 213 may be various possible pressure relief structures. For example, the pressure relief mechanism 213 may be a temperature-sensitive pressure relief mechanism, and the temperature-sensitive pressure relief mechanism is configured to be capable of being melt when the internal temperature of the battery cell 20 provided with the pressure relief mechanism 213 reaches a threshold; and/or the pressure relief mechanism 213 may be a pressure-sensitive pressure relief mechanism, and the pressure-sensitive pressure relief mechanism is configured to be capable of being ruptured when the internal air pressure of the battery cell 20 provided with the pressure relief mechanism 213 reaches a threshold.

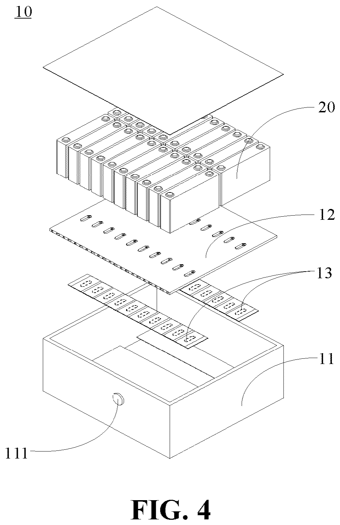

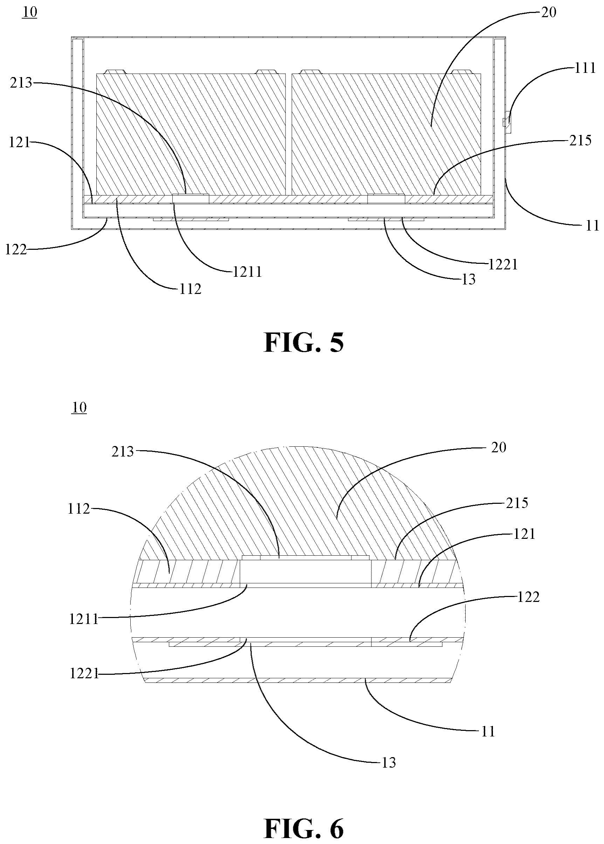

FIG. 4 shows a schematic structural diagram of a battery 10 according to another embodiment of the present application. FIG. 5 shows a schematic sectional diagram of a battery 10 according to another embodiment of the present application. FIG. 6 shows a partial schematic sectional diagram of a battery 10 according to another embodiment of the present application. For example, FIG. 5 may be a schematic sectional diagram of a corresponding portion of the battery 10 in FIG. 4, and FIG. 6 may be an enlarged schematic sectional diagram of the corresponding portion of the battery 10 in FIG. 4 or FIG. 5.

In some implementations, as shown in FIG. 4 to FIG. 6, the battery 10 includes: a battery cell 20, a support component 12, and a first protective component 13. A first wall 215 of the battery cell 20 is provided with a pressure relief mechanism 213. The support component 12 is configured to support the battery cell 20. The support component 12 includes a first support component 121 and a second support component 122 that are connected. The first support component 121 and the second support component 122 are located on the same side of the battery cell 20. The first support component 121 is located between the first wall 215 and the second support component 122 and attached to the first wall 215. The first support component 121 is provided with a first through hole 1211 corresponding to the pressure relief mechanism 213, and the second support component 122 is provided with a second through hole 1221 corresponding to the pressure relief mechanism 213. The first protective component 13 is configured to close the second through hole 1221, and the first protective component 13 is configured to be destroyed when the pressure relief mechanism 213 is actuated so as to allow an emission from the battery cell 20 to pass through the second support component 122.

It should be understood that in the embodiment of the present application, the shape of the first through hole 1211 on the first support component 121 in a direction perpendicular to the thickness direction of the first support component 121 can be set according to actual needs. For example, the shape of the first through hole 1211 can be set according to the shape of the pressure relief mechanism 213 of the battery cell 20. For example, the shape of the first through hole 1211 includes, but is not limited to, a circle, an ellipse, a rectangle, and a regular polygon. Correspondingly, in the embodiment of the present application, the shape of the second through hole 1221 on the second support component 122 in a direction perpendicular to the thickness direction of the second support component 122 can be set according to actual needs. For example, the shape of the second through hole 1221 can be set according to the shape of the pressure relief mechanism 213 of the battery cell 20. For example, the shape of the second through hole 1221 includes, but is not limited to, a circle, an ellipse, a rectangle, and a regular polygon.

It should also be understood that the first wall 215 in the embodiment of the present application may be any wall of the battery cell 20. For example, the first wall 215 includes, but is not limited to, the following examples: the first wall 215 may be a wall with the smallest area of the battery cell 20; the first wall 215 may also be a wall with the largest area of the battery cell 20; the first wall 215 may be a wall of the battery cell 20 on which the electrode terminal 214 is arranged; the first wall 215 may be a wall adjacent to the wall of the battery cell 20 on which the electrode terminal 214 is arranged; and the first wall may be a wall opposite to the wall of the battery cell 20 on which the electrode terminal 214 is arranged.

It should also be understood that in the embodiment of the present application, as shown in FIG. 4 and FIG. 5, a box pressure relief valve 111 is arranged on a surface of the side wall of the box 11 of the battery 10 away from the interior of the box 11. The box pressure relief valve 111 is configured to, when the pressure relief mechanism 213 of the battery cell 20 is actuated, relieve the high-pressure and high-temperature gas generated in the pressure relief process, so as to reduce the thermal impact on the battery cell 20 and improve the use performance of the battery 10.

It should also be understood that in the embodiment of the present application, the first support component 121 is adhesively connected to the first wall 215 of the battery cell 20. For example, as shown in FIG. 5 and FIG. 6, the first support component 121 is connected to the first wall 215 of the battery cell 20 via an adhesive 112.

It should also be understood that in the embodiment of the present application, the pressure relief mechanism 213 is configured, when the internal pressure or temperature of the battery cell 20 reaches the threshold, to be actuated to relieve the internal pressure. The first through hole 1211 in the embodiment of the present application is configured to allow the emission from the battery cell 20 to pass through the first support component 121, when the pressure relief mechanism 213 is actuated. The second through hole 1221 in the embodiment of the present application is configured to allow the emission from the battery cell 20 to pass through the second support component 122, when the pressure relief mechanism 213 is actuated.

It should also be understood that in the embodiment of the present application, an average distance between the first support component 121 and the second support component 122 can be set according to actual needs, to meet the structural strength of the battery 10. It should also be understood that, in the embodiment of the present application, the battery 10 further includes a plurality of other support components, such as a third support component. The third support component may be arranged on a side of the second support component 122 away from the pressure relief mechanism 213 of the battery 10, or the third support component may be arranged between the first support component 121 and the second support component 122.

In the embodiment of the present application, the support component 12 and the first protective component 13 are arranged in the battery 10, the support component 12 includes the first support component 121 and the second support component 122 that are connected, the first support component 121 and the second support component 122 are located on the same side of the battery cell 20, the first support component 121 is located between the first wall 215 and the second support component 122 and is attached to the first wall 215, the second support component 122 is provided with the second through hole 1221 corresponding to the pressure relief mechanism 213, the first protective component 13 is configured to close the second through hole 1221, and the first protective component 13 is configured to be destroyed when the pressure relief mechanism 213 is actuated so that the emission from the battery cell 20 passes through the second support component 122. In this way, when thermal runaway occurs in the battery cell 20, the arrangement of the first protective component 13 is capable of reducing the risk of the emission from a side of the first protective component 13 away from the pressure relief mechanism 213 flowing to the pressure relief mechanism 213 through the second through hole 1221, so as to reduce a thermal impact on the battery cell 20, and reduce the impact on an actuation performance of the pressure relief mechanism 213, thereby improving the use performance of the battery 10.

In some implementations, as shown in FIG. 5 and FIG. 6, the first protective component 13 is arranged on a surface of the second support component 122 away from the first wall 215. In this way, in the embodiment of the present application, when thermal runaway occurs in the battery cell 20, the first protective component 13 is destroyed when the pressure relief mechanism 213 of the battery cell 20 is actuated, which is capable of effectively reducing the risk of the emission from the side of the first protective component 13 away from the pressure relief mechanism 213 flowing to the pressure relief mechanism 213 through the second through hole 1221, thereby reducing the impact on the actuation performance of the pressure relief mechanism 213 and improving the use performance of the battery 10. At the same time, the arranging method is simple and easy to process and manufacture.

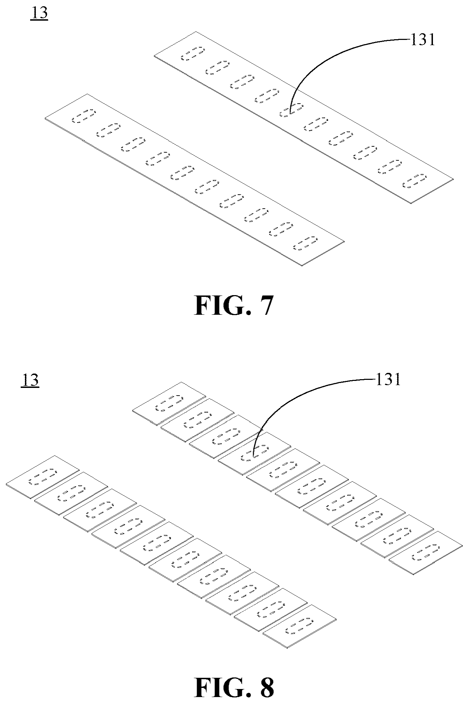

FIG. 7 shows a schematic structural diagram of a first protective component 13 according to an embodiment of the present application. FIG. 8 shows a schematic structural diagram of a first protective component 13 according to another embodiment of the present application.

In some implementations, as shown in FIG. 7 and FIG. 8, the first protective component 13 is provided with a first weak region 131, the first weak region 131 is configured to be capable of being destroyed by the emission when the pressure relief mechanism 213 is actuated, so as to allow the emission to pass through the first weak region 131.

It should be understood that in the embodiment of the present application, at least a portion of at least one surface of the first protective component 13 perpendicular to the thickness direction of the first protective component 13 can be set as the first weak region 131, so that it can be destroyed by the emission when the pressure relief mechanism 213 is actuated, to allow the emission to pass through the first weak region 131.

It should also be understood that in the embodiment of the present application, in the direction perpendicular to the thickness direction of the first protective component 13, the shape of the first weak region 131 can be set according to actual needs. For example, the shape of the first weak region 131 can be set according to the shape of the pressure relief mechanism 213 of the battery cell 20. For example, the shape of the first weak region 131 includes, but is not limited to, a circle, an ellipse, a rectangle, and a regular polygon.

It should also be understood that the quantity of the first weak regions 131 arranged on the first protective component 13 can be set according to actual needs. For example, there may be one or a plurality of the first weak regions 131.

In the embodiment of the present application, the first weak region 131 is arranged on the first protective component 13, and the first weak region 131 is configured to be capable of being destroyed by the emission when the pressure relief mechanism 213 is actuated, that is, when the internal pressure or temperature of the battery cell 20 reaches a threshold, the emission is capable of promptly and quickly passing through the first weak region 131 to achieve rapid pressure relief of the battery cell 20, thereby reducing the influence of the accumulation of the emission on the side of the first protective component 13 close to the pressure relief mechanism 213 of the battery 10 on the actuation performance of the pressure relief mechanism 213, and thereby improving the use performance of the battery 10.

In some implementations, the first weak region 131 meets at least one of the following: a melting point of a material of the first weak region 131 is lower than a melting point of a material of the rest part of the first protective component 13; a thickness of the first weak region 131 is smaller than a thickness of the rest part of the first protective component 13; a surface of the first weak region 131 in a direction perpendicular to a thickness direction of the first protective component 13 is provided with a notch.

It should be understood that in the embodiment of the present application, the melting point of the material at the first weak region 131 can be set to be less than or equal to a preset threshold, so that when the pressure relief mechanism 213 is actuated, the first weak region 131 is more easily melted by the emission discharged through the pressure relief mechanism 213 than the rest part of the first protective component 13. Second, the thickness of the first weak region 131 can also be set to be smaller than the thickness of the rest part of the first protective component 13. Since the first weak region 131 is thinner than the rest part of the first protective component 13, when the pressure relief mechanism 213 is actuated, the first weak region 131 is more easily damaged by the emission released through the pressure relief mechanism 213 than the rest part of the first protective component 13.

It should also be understood that in the embodiment of the present application, the shape of the notch provided on the surface of the first weak region 131 perpendicular to the thickness direction of the first protective component 13 can be set according to actual needs. By way of example, the notch includes but is not limited to a straight line notch, a cross notch, a star-shaped notch, and an H-shaped notch.

In the embodiment of the present application, the first weak region 131 is set to at least one of the following: the melting point of the material at the first weak region 131 is lower than the melting point of the material of the rest part of the first protective component 13; the thickness of the first weak region 131 is smaller than the thickness of the rest part of the first protective component 13; the surface of the first weak region 131 perpendicular to the thickness direction of the first protective component 13 is provided with the notch, so that the first weak region 131 is more easily destroyed by the emission of the battery cell 20 than the rest part of the first protective component 13, and when the internal pressure or temperature of the battery cell 20 reaches the threshold, the emission is capable of promptly and quickly passing through the first weak region 131 to achieve rapid pressure relief of the battery cell 20, thereby reducing the influence of the accumulation of the emission on the side of the first protective component 13 close to the pressure relief mechanism 213 of the battery cell 20 on the actuation performance of the pressure relief mechanism 213, and further improving the use performance of the battery 10.

In some implementations, as shown in FIG. 7 and FIG. 8, there are a plurality of the pressure relief mechanisms 213, a plurality of the first weak regions 131 are provided on the first protective component 13, and the plurality of first weak regions 131 one-to-one correspond to the plurality of pressure relief mechanisms 213.

It should be understood that in the embodiment of the present application, the first protective component 13 may be a whole, or the first protective component may include a plurality of sub-protective components. For example, the first protective component 13 includes a plurality of sub-protective components, and each of the sub-protective components is provided with one first weak region 131 on at least one surface perpendicular to the first protective component 13, and each of the first weak regions 131 one-to-one corresponds to each of the pressure relief mechanisms 213.

In the embodiment of the present application, by arranging the plurality of first weak regions 131 on the first protective component 13, and the plurality of first weak regions 131 one-to-one correspond to the plurality of pressure relief mechanisms 213, when thermal runaway occurs in the battery cell 20, that is, when the internal pressure or temperature of the battery cell 20 reaches the threshold, the emission generated by the battery cell 20 is capable of promptly and quickly passing through the corresponding first weak region 131, so as to achieve rapid pressure relief of the battery cell 20, and at the same time reducing the influence of the emission on the actuation performance of the pressure relief mechanisms 213 of other battery cells 20, thereby improving the use performance of the battery 10.

In some implementations, on a plane perpendicular to the thickness direction of the first protective component 13, a projection of the first protective component 13 covers a projection of the pressure relief mechanism 213.

It should be understood that in the embodiment of the present application, the projection of the first protective component 13 or the pressure relief mechanism 213 on the plane perpendicular to the thickness direction of the first protective component 13 can be an orthographic projection in the thickness direction, or the projection of the first protective component 13 or the pressure relief mechanism 213 on the plane perpendicular to the thickness direction of the first protective component 13 can also be a projection in another direction.

In the embodiment of the present application, on the plane perpendicular to the thickness direction of the first protective component 13, by setting the projection of the first protective component 13 to cover the projection of the pressure relief mechanism 213, the first protective component 13 is capable of further reducing the risk of the emission from the side of the first protective component 13 away from the pressure relief mechanism 213 flowing to the pressure relief mechanism 213 through the first protective component 13, thereby reducing the impact on the actuation performance of the pressure relief mechanism 213, and further improving the use performance of the battery 10.

In some implementations, the material of the first protective component 13 includes at least one of the following materials: polypropylene, polycarbonate, polyethylene terephthalate, mica, glass fiber, ceramic fiber, and polyethylene epoxy resin. In this way, in the embodiment of the present application, by setting the material of the first protective component 13 to include at least one of the following materials: polypropylene, polycarbonate, polyethylene terephthalate, mica, glass fiber, ceramic fiber, and polyethylene epoxy resin, the insulation performance of the first protective component 13 is capable of being effectively improved, and the risk of short circuit inside the battery 10 is capable of being reduced, thereby improving the use performance of the battery 10.

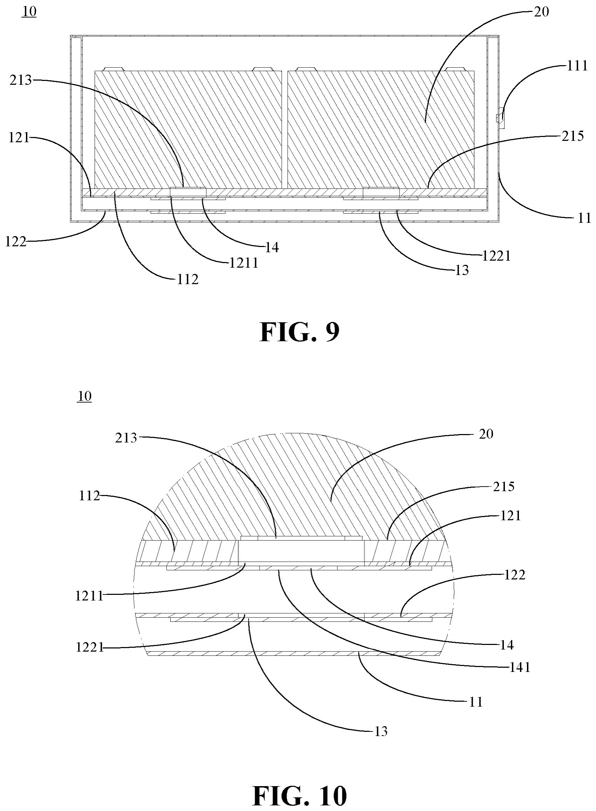

FIG. 9 shows a schematic sectional diagram of a battery 10 according to another embodiment of the present application. FIG. 10 shows a partial schematic sectional diagram of a battery 10 according to another embodiment of the present application. For example, FIG. 10 may be an enlarged schematic sectional diagram of the corresponding portion of the battery 10 in FIG. 9.

In some implementations, as shown in FIG. 9 and FIG. 10, the battery 10 further includes: a second protective component 14, the second protective component 14 is configured to close the first through hole 1211, and the second protective component 14 is configured to be destroyed when the pressure relief mechanism 213 is actuated, so as to allow the emission from the battery cell 20 to pass through the first support component 121. In this way, in the embodiment of the present application, the second protective component 14 is arranged in the battery 10, the second protective component 14 is configured to close the first through hole 1211, and the second protective component 14 is configured to be destroyed when the pressure relief mechanism 213 is actuated, so that the emission from the battery cell 20 pass through the first support component 121. When thermal runaway occurs in the battery cell 20, the arrangement of the second protective component 14 is capable of reducing the risk of the emission from a side of the second protective component 14 away from the pressure relief mechanism 213 flowing to the pressure relief mechanism 213 through the first through hole 1211, so as to reduce a thermal impact on the battery cell 20, and reduce the impact on an actuation performance of the pressure relief mechanism 213, thereby improving the use performance of the battery 10.

In some implementations, as shown in FIG. 9 and FIG. 10, the second protective component 14 is arranged on a surface of the first support component 121 away from the first wall 215. In this way, in the embodiment of the present application, when thermal runaway occurs in the battery cell 20, the second protective component 14 is destroyed when the pressure relief mechanism 213 of the battery cell 20 is actuated, which is capable of effectively reducing the risk of the emission from the side of the second protective component 14 away from the pressure relief mechanism 213 flowing to the pressure relief mechanism 213 through the first through hole 1211, thereby reducing the impact on the actuation performance of the pressure relief mechanism 213 and improving the use performance of the battery 10. At the same time, the arranging method is simple and easy to process and manufacture.

In some implementations, the second protective component 14 is provided with a second weak region 141, the second weak region 141 is configured to be capable of being destroyed by the emission when the pressure relief mechanism 213 is actuated, so as to allow the emission to pass through the second protective component 14.

It should be understood that in the embodiment of the present application, at least a portion of at least one surface of the second protective component 14 perpendicular to the thickness direction of the second protective component 14 can be set as the second weak region 141, so that it can be destroyed by the emission when the pressure relief mechanism 213 is actuated, to allow the emission to pass through the second weak region 141.

It should also be understood that in the embodiment of the present application, in the direction perpendicular to the thickness direction of the second protective component 14, the shape of the second weak region 141 can be set according to actual needs. For example, the shape of the second weak region 141 can be set according to the shape of the pressure relief mechanism 213 of the battery cell 20. For example, the shape of the second weak region 141 includes, but is not limited to, a circle, an ellipse, a rectangle, and a regular polygon.

It should also be understood that the quantity of the second weak regions 141 arranged on the second protective component 14 can be set according to actual needs. For example, there may be one or a plurality of the second weak regions 141.

In the embodiment of the present application, the second weak region 141 is arranged on the second protective component 14, and the second weak region 141 is configured to be capable of being destroyed by the emission when the pressure relief mechanism 213 is actuated, that is, when the internal pressure or temperature of the battery cell 20 reaches a threshold, the emission is capable of promptly and quickly passing through the second weak region 141 to achieve rapid pressure relief of the battery cell 20, thereby reducing the influence of the accumulation of the emission on the side of the second protective component 14 close to the pressure relief mechanism 213 of the battery 10 on the actuation performance of the pressure relief mechanism 213, and thereby improving the use performance of the battery 10.

In some implementations, the second weak region meets at least one of the following: a melting point of a material of the second weak region 141 is lower than a melting point of a material of the rest part of the second protective component 14; a thickness of the second weak region 141 is smaller than a thickness of the rest part of the second protective component 14; a surface of the second weak region 141 in a direction perpendicular to a thickness direction of the second protective component 14 is provided with a notch.

It should be understood that in the embodiment of the present application, the melting point of the material at the second weak region 141 can be set to be less than or equal to a preset threshold, so that when the pressure relief mechanism 213 is actuated, the second weak region 141 is more easily melted by the emission discharged through the pressure relief mechanism 213 than the rest part of the second protective component 14. Second, the thickness of the second weak region 141 can also be set to be smaller than the thickness of the rest part of the second protective component 14. Since the second weak region 141 is thinner than the rest part of the second protective component 14, when the pressure relief mechanism 213 is actuated, the second weak region 141 is more easily damaged by the emission released through the pressure relief mechanism 213 than the rest part of the second protective component 14.

It should also be understood that in the embodiment of the present application, the shape of the notch provided on the surface of the second weak region 141 perpendicular to the thickness direction of the second protective component 14 can be set according to actual needs. By way of example, the notch includes but is not limited to a straight line notch, a cross notch, a star-shaped notch, and an H-shaped notch.

In the embodiment of the present application, the second weak region 141 is set to at least one of the following: the melting point of the material at the second weak region 141 is lower than the melting point of the material of the rest part of the second protective component 14; the thickness of the second weak region 141 is smaller than the thickness of the rest part of the second protective component 14; the surface of the second weak region 141 perpendicular to the thickness direction of the second protective component 14 is provided with the notch, so that the second weak region 141 is more easily destroyed by the emission of the battery cell 20 than the rest part of the second protective component 14, and when the internal pressure or temperature of the battery cell 20 reaches the threshold, the emission is capable of promptly and quickly passing through the second weak region 141 to achieve rapid pressure relief of the battery cell 20, thereby reducing the influence of the accumulation of the emission on the side of the second protective component 14 close to the pressure relief mechanism 213 of the battery cell 20 on the actuation performance of the pressure relief mechanism 213, and further improving the use performance of the battery 10.

In some implementations, the material of the second protective component 14 includes at least one of the following materials: polypropylene, polycarbonate, polyethylene terephthalate, mica, glass fiber, ceramic fiber, and polyethylene epoxy resin. In this way, in the embodiment of the present application, by setting the material of the second protective component 14 to include at least one of the following materials: polypropylene, polycarbonate, polyethylene terephthalate, mica, glass fiber, ceramic fiber, and polyethylene epoxy resin, the insulation performance of the second protective component 14 is capable of being effectively improved, and the risk of short circuit inside the battery 10 is capable of being reduced, thereby improving the use performance of the battery 10.

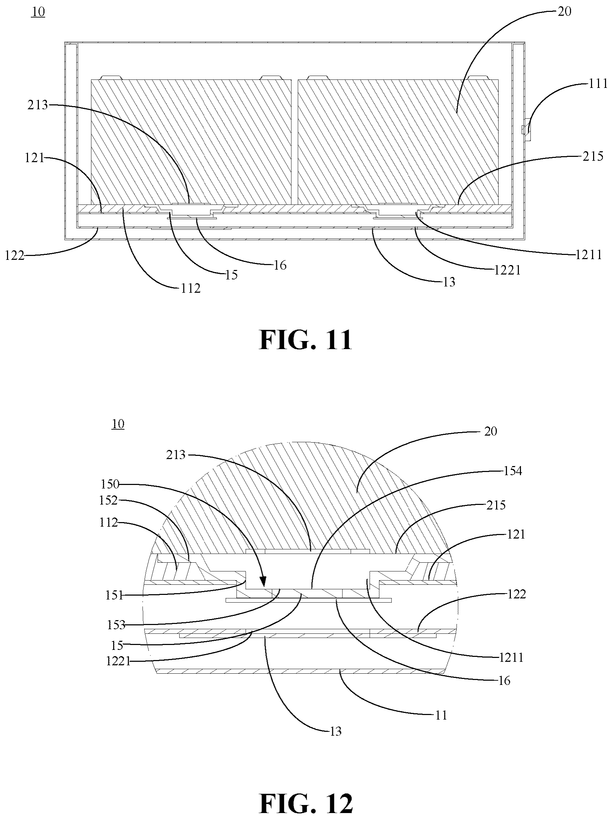

FIG. 11 shows a schematic sectional diagram of a battery 10 according to another embodiment of the present application. FIG. 12 shows a partial schematic sectional diagram of a battery 10 according to another embodiment of the present application. For example, FIG. 12 may be an enlarged schematic sectional diagram of the corresponding portion of the battery 10 in FIG. 11.

In some implementations, as shown in FIG. 11 and FIG. 12, the battery 10 further includes: a separating component 15, the separating component 15 is connected to the first support component 121, the first support component 121 is attached to the first wall 215 by an adhesive 112, and the separating component 15 is configured to prevent the adhesive 112 from being applied to a region where the pressure relief mechanism 213 is located.

It should be understood that in the embodiment of the present application, the adhesive 112 used to adhere the first support component 121 to the first wall 215 includes, but is not limited to, polyurethane adhesive, acrylic adhesive, and silicone rubber adhesive.

In the embodiment of the present application, the separating component 15 is arranged in the battery 10, and the separating component 15 is connected to the first support component 121. When the first support component 121 is attached to the first wall 215 by the adhesive 112, the separating component 15 is configured to prevent the adhesive 112 from being applied to the region where the pressure relief mechanism 213 is located, which is capable of effectively reducing the impact of the adhesive 112 entering the pressure relief mechanism 213 on the actuation performance of the pressure relief mechanism 213, thereby improving the use performance of the battery 10.

In some implementations, as shown in FIG. 12, the separating component 15 is provided with a groove 150 opening toward the battery cell 20, at least a portion of a side wall 151 of the groove 150 is located in the first through hole 1211, and an outer edge 152 of the groove 150 is connected to the side wall 151 and is arranged between the first support component 121 and the first wall 215.

In the embodiment of the present application, by setting the separating component 15 as a groove 150 with the opening toward the battery cell 20, at least a portion of the side wall 151 of the groove 150 is located in the first through hole 1211, and the outer edge 152 of the groove 150 is connected to the side wall 151 and is arranged between the first support component 121 and the first wall 215. When the first support component 121 is configured to be attached to the first wall 215 by the adhesive 112, the adhesive 112 is capable of being effectively prevented from being applied between the first support component 121 and the pressure relief mechanism 213, thereby effectively reducing the influence of the adhesive 112 entering the pressure relief mechanism 213 on the actuation performance of the pressure relief mechanism 213, and further improving the use performance of the battery 10.

In some implementations, the bottom wall 153 of the groove 150 is configured to be capable of being destroyed by the emission when the pressure relief mechanism 213 is actuated, so that the emission passes through the separating component 15.

It should be understood that in the embodiment of the present application, the shape of the bottom wall 153 of the groove 150 can be set according to actual needs. For example, the shape of the bottom wall 153 of the groove 150 can be set according to the shape of the first through hole 1211 or the shape of the pressure relief mechanism 213 of the battery cell 20. For example, the shape of the bottom wall 153 of the groove 150 includes, but is not limited to, a circle, an ellipse, a rectangle, and a regular polygon.

In the embodiment of the present application, by configuring the bottom wall 153 of the groove 150 to be capable of being destroyed by the emission discharged from the battery cell 20 when the pressure relief mechanism 213 is actuated, and allowing the emission to pass through the separating component 15, the emission can be discharged in a timely manner, thereby reducing the impact of the accumulation of the emission in the groove 150 on the actuation performance of the pressure relief mechanism 213, further reducing the thermal impact on the battery cell 20, and improving the use performance of the battery 10.

In some implementations, as shown in FIG. 12, the bottom wall 153 of the groove 150 is provided with a third weak region 154, and the third weak region 154 is configured to be capable of being destroyed by the emission when the pressure relief mechanism 213 is actuated, so that the emission passes through the separating component 15.

It should be understood that in the embodiment of the present application, at least a portion of at least one surface of the bottom wall 153 of the groove 150 perpendicular to the thickness direction of the bottom wall 153 can be set as the third weak region 154, so that it can be destroyed by the emission when the pressure relief mechanism 213 is actuated, thereby allowing the emission to pass through the separating component 15.

It should also be understood that in the embodiment of the present application, in the direction perpendicular to the thickness direction of the bottom wall 153, the shape of the third weak region 154 can be set according to actual needs. For example, the shape of the third weak region 154 can be set according to the shape of the pressure relief mechanism 213 of the battery cell 20. For example, the shape of the third weak region 154 includes, but is not limited to, a circle, an ellipse, a rectangle, and a regular polygon.

It should also be understood that the quantity of the third weak regions 154 arranged on the bottom wall 153 of the groove 150 can be set according to actual needs. For example, there may be one or a plurality of the third weak regions 154.

In the embodiment of the present application, the third weak region 154 is arranged on the bottom wall 153 of the groove 150, and the third weak region 154 is configured to be capable of being destroyed by the emission when the pressure relief mechanism 213 is actuated, that is, when the internal pressure or temperature of the battery cell 20 reaches a threshold, the emission is capable of promptly and quickly passing through the separating component 15 to achieve rapid pressure relief of the battery cell 20, thereby effectively reducing the influence of the accumulation of the emission in the groove 150 on the actuation performance of the pressure relief mechanism 213, and thereby improving the use performance of the battery 10.

In some implementations, the third weak region 154 meets at least one of the following: a melting point of a material of the third weak region 154 is lower than a melting point of a material of the rest part of the separating component 15; a thickness of the third weak region 154 is smaller than a thickness of the rest part of the separating component 15; a surface of the third weak region 154 in a direction perpendicular to a thickness direction of the separating component 15 is provided with a notch.

It should be understood that in the embodiment of the present application, the melting point of the material at the third weak region 154 can be set to be less than or equal to a preset threshold, so that when the pressure relief mechanism 213 is actuated, the third weak region 154 is more easily melted by the emission discharged through the pressure relief mechanism 213 than the rest part of the separating component 15. Second, the thickness of the third weak region 154 can also be set to be smaller than the thickness of the rest part of the separating component 15. Since the third weak region 154 is thinner than the rest part of the separating component 15, when the pressure relief mechanism 213 is actuated, the third weak region 154 is more easily damaged by the emission released through the pressure relief mechanism 213 than the rest part of the separating component 15.

It should also be understood that in the embodiment of the present application, the shape of the notch provided on the surface of the third weak region 154 perpendicular to the thickness direction of the separating component 15 can be set according to actual needs. By way of example, the notch includes but is not limited to a straight line notch, a cross notch, a star-shaped notch, and an H-shaped notch.

In the embodiment of the present application, the third weak region 154 is set to at least one of the following: the melting point of the material at the third weak region 154 is lower than the melting point of the material of the rest part of the separating component 15; the thickness of the third weak region 154 is smaller than the thickness of the rest part of the separating component 15; the surface of the third weak region 154 perpendicular to the thickness direction of the separating component 15 is provided with the notch, so that the third weak region 154 is more easily destroyed by the emission of the battery cell 20 than the rest part of the separating component 15, and when the internal pressure or temperature of the battery cell 20 reaches the threshold, the emission is capable of promptly and quickly passing through the third weak region 154 to achieve rapid pressure relief of the battery cell 20, thereby reducing the influence of the accumulation of the emission on the side of the separating component 15 close to the pressure relief mechanism 213 of the battery cell 20 on the actuation performance of the pressure relief mechanism 213, and further improving the use performance of the battery 10.

In some implementations, as shown in FIG. 11 and FIG. 12, the battery 10 further includes: a third protective component 16 connected to a surface of the separating component 15 facing away from the pressure relief mechanism 213 to protect the separating component 15.

It should be understood that in the embodiment of the present application, the third protective component 16 and the separating component 15 can be adhesively connected. For example, the third protective component 16 and the separating component 15 can be connected by an adhesive 112.

It should also be understood that in the embodiment of the present application, the shape of the third protective component 16 in a direction perpendicular to the thickness direction of the bottom wall 153 of the groove 150 can be set according to actual needs. For example, the shape of the third protective component 16 in the direction perpendicular to the thickness direction of the bottom wall 153 of the groove 150 can be set according to the shape of the bottom wall 153 of the groove 150. For example, the shape of the third protective component 16 in the direction perpendicular to the thickness direction of the bottom wall 153 of the groove 150 includes, but is not limited to, a circle, an ellipse, a rectangle, and a regular polygon.

It should also be understood that, in the embodiments of the present application, the material of the third protective component 16 includes at least one of the following materials: polypropylene, polycarbonate, polyethylene terephthalate, mica, glass fiber, ceramic fiber, and polyethylene epoxy resin. In this way, in the embodiment of the present application, by setting the third protective component 16 to include at least one of the following materials: polypropylene, polycarbonate, polyethylene terephthalate, mica, glass fiber, ceramic fiber, and polyethylene epoxy resin, the insulation performance, heat resistance, and chemical stability of the third protective component 16 can be improved, so as to effectively reduce the possibility of damage to the surface of the separating component 15 facing away from the pressure relief mechanism 213 when subjected to vibration, impact, high temperature, and the like, thereby improving the use performance of the battery 10. In the embodiment of the present application, the third protective component 16 is arranged in the battery 10, and the third protective component 16 is connected to the surface of the separating component 15 facing away from the pressure relief mechanism 213, so that the third protective component 16 is capable of protecting the separating component 15, thereby reducing the possibility of damage to the surface of the separating component 15 facing away from the pressure relief mechanism 213 when subjected to vibration, impact, high temperature, and the like, thereby improving the use performance of the battery 10.

In some implementations, the separating component 15 and the third protective component 16 are configured to be capable of being destroyed by the emission from the battery cell 20 when the pressure relief mechanism 213 is actuated, so that the emission passes through the separating component 15 and the third protective component 16. In this way, in the embodiment of the present application, the separating component 15 and the third protective component 16 are configured to be capable of being destroyed by the emission from the battery cell 20 when the pressure relief mechanism 213 is actuated, so that the emission passes through the separating component 15 and the third protective component 16. As a result, during the actuation of the pressure relief mechanism 213, the emission discharged by the pressure relief mechanism 213 can smoothly pass through the separating component 15 and the third protective component 16 and be discharged from the electrical cavity of the battery 10, thereby reducing the thermal impact on the battery cell 20 and improving the use performance of the battery 10.

In some implementations, a melting point of the third protective component 16 is greater than a melting point of the separating component 15. In this way, in the embodiment of the present application, the third protective component 16 is connected to the surface of the separating component 15 facing away from the pressure relief mechanism 213, and the melting point of the third protective component 16 is set to be greater than the melting point of the separating component 15; therefore, it is capable of reducing the possibility of damage to the surface of the separating component 15 facing away from the pressure relief mechanism 213 when subjected to vibration, impact, high temperature, and the like, thereby improving the use performance of the battery 10.

Referring to FIG. 4 to FIG. 8 again, a battery 10 is provided, including: a battery cell 20, a support component 12, and a first protective component 13. A first wall 215 of the battery cell 20 is provided with a pressure relief mechanism 213. The support component 12 is configured to support the battery cell 20. The support component 12 includes a first support component 121 and a second support component 122 that are connected. The first support component 121 and the second support component 122 are located on the same side of the battery cell 20. The first support component 121 is located between the first wall 215 and the second support component 122 and attached to the first wall 215. The first support component 121 is provided with a first through hole 1211 corresponding to the pressure relief mechanism 213, and the second support component 122 is provided with a second through hole 1221 corresponding to the pressure relief mechanism 213. The first protective component 13 is configured to close the second through hole 1221, and the first protective component 13 is configured to be destroyed when the pressure relief mechanism 213 is actuated so as to allow an emission from the battery cell 20 to pass through the second support component 122. The first protective component 13 is arranged on a surface of the second support component 122 away from the first wall 215. The first protective component 13 is provided with a first weak region 131, the first weak region 131 is configured to be capable of being destroyed by the emission when the pressure relief mechanism 213 is actuated, so as to allow the emission to pass through the first weak region 131. The first protective component 13 is provided with a plurality of the first weak regions 131, and the plurality of first weak regions 131 one-to-one correspond to the plurality of pressure relief mechanisms 213.

An embodiment of the present application further provides an electrical device, including the battery 10 of any of the above-mentioned embodiments, and the battery 10 is configured to provide electric energy for the electrical device. Specifically, the electrical device may be the vehicle 1 as shown in FIG. 1 or any electrical device utilizing a battery 10.

An embodiment of the present application further provides an energy storage device, including the battery 10 of any of the above-mentioned embodiments, and the battery 10 is configured to store energy for the energy storage device.

While the present application has been described with reference to the above embodiments, various modifications can be made and components therein may be replaced with equivalents without departing from the scope of the present application. In particular, the technical features mentioned in the various examples can be combined in any manner as long as there is no structural conflict. The present application is not limited to the particular embodiments disclosed herein, but rather includes all technical solutions falling within the scope of the claims.

## Claims

1. A battery, comprising:
a battery cell (20), a first wall (215) of the battery cell (20) being provided with a pressure relief mechanism (213);
a support component (12) configured to support the battery cell (20), the support component (12) comprising a first support component (121) and a second support component (122) that are connected, the first support component (121) and the second support component (122) being located on the same side of the battery cell (20), the first support component (121) being located between the first wall (215) and the second support component (122) and being attached to the first wall (215), the first support component (121) being provided with a first through hole (1211) corresponding to the pressure relief mechanism (213), and the second support component (122) being provided with a second through hole (1221) corresponding to the pressure relief mechanism (213); and
a first protective component (13), the first protective component (13) being configured to close the second through hole (1221), and the first protective component (13) being configured to be destroyed when the pressure relief mechanism (213) is actuated, so as to allow an emission from the battery cell (20) to pass through the second support component (122).

2. The battery according to claim 1, wherein the first protective component (13) is arranged on a surface of the second support component (122) away from the first wall (215).

3. The battery according to claim 1 or 2, wherein the first protective component (13) is provided with a first weak region (131), the first weak region (131) is configured to be capable of being destroyed by the emission when the pressure relief mechanism (213) is actuated, so as to allow the emission to pass through the first weak region (131).

4. The battery according to claim 3, wherein the first weak region (131) meets at least one of the following:
a melting point of a material of the first weak region (131) is lower than a melting point of a material of the rest part of the first protective component (13);
a thickness of the first weak region (131) is smaller than a thickness of the rest part of the first protective component (13); and
a surface of the first weak region (131) in a direction perpendicular to a thickness direction of the first protective component (13) is provided with a notch.

5. The battery according to claim 3 or 4, wherein there are a plurality of pressure relief mechanisms (213), the first protective component (13) is provided with a plurality of first weak regions (131), and the plurality of first weak regions (131) one-to-one correspond to the plurality of the pressure relief mechanisms (213).

6. The battery according to any one of claims 1 to 5, wherein on a plane perpendicular to the thickness direction of the first protective component (13), a projection of the first protective component (13) covers a projection of the pressure relief mechanism (213).

7. The battery according to any one of claims 1 to 6, wherein the battery further comprises:
a second protective component (14), the second protective component (14) being configured to close the first through hole (1211), and the second protective component (14) being configured to be destroyed when the pressure relief mechanism (213) is actuated, so as to allow the emission from the battery cell (20) to pass through the first support component (121).

8. The battery according to claim 7, wherein the second protective component (14) is arranged on a surface of the first support component (121) away from the first wall (215).

9. The battery according to claim 7 or 8, wherein the second protective component (14) is provided with a second weak region (141), the second weak region (141) is configured to be capable of being destroyed by the emission when the pressure relief mechanism (213) is actuated, so as to allow the emission to pass through the second protective component (14).

10. The battery according to claim 9, wherein the second weak region (141) meets at least one of the following:
a melting point of a material of the second weak region (141) is lower than a melting point of a material of the rest part of the second protective component (14);
a thickness of the second weak region (141) is smaller than a thickness of the rest part of the second protective component (14); and
a surface of the second weak region (141) in a direction perpendicular to a thickness direction of the second protective component (14) is provided with a notch.

11. The battery according to any one of claims 1 to 6, wherein the battery further comprises:
a separating component (15), wherein the separating component (15) is connected to the first support component (121), the first support component (121) is attached to the first wall (215) by an adhesive (112), and the separating component (15) is configured to prevent the adhesive (112) from being applied to a region where the pressure relief mechanism (213) is located.

12. The battery according to claim 11, wherein the separating component (15) is provided with a groove (150) opening toward the battery cell (20), at least a portion of a side wall (151) of the groove (150) is located in the first through hole (1211), and an outer edge (152) of the groove (150) is connected to the side wall (151) and is arranged between the first support component (121) and the first wall (215).

13. The battery according to claim 12, wherein a bottom wall (153) of the groove (150) is configured to be capable of being destroyed by the emission when the pressure relief mechanism (213) is actuated, so as to allow the emission to pass through the separating component (15).

14. The battery according to claim 13, wherein the bottom wall (153) of the groove (150) is provided with a third weak region (154), and the third weak region (154) is configured to be capable of being destroyed by the emission when the pressure relief mechanism (213) is actuated, so as to allow the emission to pass through the separating component (15).

15. The battery according to claim 14, wherein the third weak region (154) meets at least one of the following:
a melting point of a material of the third weak region (154) is lower than a melting point of a material of the rest part of the separating component (15);
a thickness of the third weak region (154) is smaller than a thickness of the rest part of the separating component (15); and
a surface of the third weak region (154) in a direction perpendicular to a thickness direction of the separating component (15) is provided with a notch.

16. The battery according to any one of claims 11 to 15, wherein the battery further comprises:
a third protective component (16) connected to a surface of the separating component (15) facing away from the pressure relief mechanism (213) to protect the separating component (15).

17. The battery according to claim 16, wherein the separating component (15) and the third protective component (16) are configured to be capable of being destroyed by the emission from the battery cell (20) when the pressure relief mechanism (213) is actuated, so as to allow the emission to pass through the separating component (15) and the third protective component (16).

18. The battery according to claim 16 or 17, wherein a melting point of the third protective component (16) is greater than a melting point of the separating component (15).

19. The battery according to any one of claims 1 to 18, wherein a material of the first protective component is one of the following materials: polypropylene, polycarbonate, polyethylene terephthalate, mica, glass fiber, ceramic fiber, and polyethylene epoxy resin.

20. An electrical device, comprising the battery according to any one of claims 1 to 19, the battery being configured to provide electric energy for the electrical device.

21. An energy storage device, comprising the battery according to any one of claims 1 to 19, the battery being configured to store electric energy for the energy storage device.
